# EUROPEAN PATENT APPLICATION

(11) **EP 0 869 390 A2**
(43) Date of publication of application: **07.10.1998**
(21) Application number: 98302632.9
(22) Date of filing: 03.04.1998
(51) Int. Cl.: G03B 27/54, H04N 3/40, H04N 9/11

(54) **Light generating apparatus, film scanning method, and light integrator**

(30) Priority: 04.04.1997 US 833147
(71) Applicant: SONY CORPORATION, Tokyo 141 (JP); Sony Pictures Entertainment Inc., Park Ridge, New Jersey 07656 (US)
(72) Inventor: Galt, John James, Glendale, California 91203 (US); Pearman, James Bernard, Glendale, California 91203 (US); Adame, Rafael Antonio, Valencia, California (US); Vary, Leslie, Covina, California 91724 (US)
(74) Representative: Pilch, Adam John Michael

(57) **Abstract**

A lamphouse for a telecine allows the spectral composition of its output to be controlled electronically. A light beam (300) is bounced off mirrors to reduce its infrared content, then passes through three beam splitters (305, 310, 315) which split off the blue, red and green content. The blue, red and green beams pass through electronic shutters (320, 325, 330) and are then reflected off dichroic mirrors (335, 340, 345) to become a single beam (348) again. The spectral content of the single beam is controllable by turning the electronic shutters (335, 340, 345) corresponding to the blue, red and green beams on and off.

## Description

This invention relates to the field of film and video processing systems, and in particular to light generating apparatus, color conversion and film conversion methods, and light integrators, such as may be applied to lamphouses suitable for use in a telecine.

A telecine is a machine which generates a videotape from a motion picture film. A highly skilled operator oversees the operation of the telecine and performs color correction and other adjustments as the videotape is being generated. A design for a telecine is disclosed in U.S. Patent 5,428,387 ("the '387 patent"), issued to two of the present inventors on June 27, 1995 and assigned to Sony Electronics Inc.

A telecine of the type described in the '387 patent exposes the motion picture film frame by frame, creating for each frame an optical film image which is recorded by a video camera. The telecine contains a mechanism which pulls each individual frame of film quickly into a particular position where a beam of light shines through it. That mechanism holds the film frame in place there long enough for it to be exposed into the video camera and for the video camera to capture the image in video. Such a telecine requires a lamphouse, that is, a bright source of light to shine through the film.

Because a lamphouse must generate bright light, it occupies considerable space in the telecine and generates a considerable amount of heat. The lamphouse for a telecine must produce light whose spectral characteristics are well matched to the spectral characteristics of the film dyes and the video camera. Nowadays, because video cameras which use charge-coupled device (CCD) arrays as light-sensing elements are preferred, the spectral characteristics of the lamphouse must be well matched to those of a CCD array, which tends to have comparatively poor sensitivity in the blue region of the visible spectrum. Furthermore, the light produced by a lamphouse for a telecine preferably has controllable spectral characteristics in order to permit the operator to perform color correction on the optical film image by varying those spectral characteristics.

Color correction is the use of controls which adjust the colors recorded in the videotape to make those colors appear more natural and attractive. There are two fundamentally different ways to perform color correction: (i) by altering optically the spectral composition of the light which passes through the film and into the video camera; or (ii) by altering electronically (nowadays, digitally) the color values generated by the video camera. The first kind of color correction is most suitable for overall adjustments of a scene's color cast, while the second kind is more appropriate for finer adjustments. Electronic digital color correction is not ideal for large adjustments because a digitized image contains quantization error which large adjustments may multiply to unacceptable levels. A telecine system should consequently be designed to provide both kinds of color correction.

In the telecine disclosed in the '387 patent, the lamphouse uses three different light sources. The light from each source passes through a filter which limits it to certain wavelengths, as well as through a mechanical shutter. The light then enters an integrating sphere, which is a reflective spherical cavity serving essentially to mix together the light coming from each of the three sources. The light which exits the integrating sphere is used to expose the film into the video camera. Color correction is effected by moving the mechanical shutters and by varying the amount of power supplied to each light source.

The lamphouse arrangement of the '387 patent is rather bulky. What is more, the use of three separate light sources to provide beams of three different spectral characteristics is inefficient. Because the light from each of the sources passes through a filter which limits it to a primary color, the majority of the energy from each light source is in effect thrown away. To achieve better colorimetry and resolution, it would be desirable to make the passbands of these filters even narrower than the passbands disclosed in the '387 patent, but a narrower passband means that even more light energy is being thrown away, requiring in effect higher lamp power to achieve the same amount of the light energy at the output of the lamphouse. Furthermore, the response time of the mechanical shutters is inherently slow.

Among the other issues with which a telecine must deal besides color correction is the question of frame rates. Movies and videotapes give the illusion of motion by playing back rapidly a sequence of still images called "frames. " Motion picture films are always designed to be played back at 24 frames per second. In contrast, under the American NTSC television standard, videotapes are designed to be played back at 29.97 frames per second. Under high-definition video standard SMPTE-240M, high-definition videotapes are also designed to be played back at 30 frames per second.

In video, the screen image consists of a large number of horizontal scan lines. For example, the NTSC standard provides for 525 scan lines on the screen, not all of which are visible. In videotapes, the scan lines that correspond to each frame are divided into two "fields," one containing the even-numbered scan lines and the second the odd-numbered scan lines. On videotape, to record a frame, one records first one of the fields and then the other field. Thus, a videotape containing NTSC video is designed to be played back at 60 fields per second, corresponding to 30 frames per second.

When converting a film to videotape, it is necessary to bridge the gap between the film frame rate of 24 frames per second and the U.S. videotape rates of 30 frames and 60 fields per second. This is accomplished by means of a process called "3-2 pulldown." In this process, even-numbered frames of the film are recorded as two successive fields, both obtained by "projecting" the same even-numbered frame into the video camera. Odd-numbered frames of the film are recorded as three successive fields, all obtained by "projecting" the same odd-numbered frame into the video camera. Thus, every pair of frames in the film, which takes 1/12th of a second to play back at the film playback rate of 24 frames per second, is converted into five videotape fields, which also take 1/12th of a second to play back at the videotape playback rate of 60 fields per second.

In order to implement 3-2 pulldown, a telecine must expose each frame of film either twice or three times. This exposure must take place at a time when the film frame being exposed is at rest, and it must be synchronized with the operation of the video camera. In the telecine described in the '387 patent, these multiple exposures are achieved by means of an additional mechanical shutter at the output of the integrating sphere. The additional mechanical shutter comprises a motor-driven rotating disk. This mechanism is bulky and subject to mechanical wear.

Another way of achieving 3-2 pulldown is by the use of digital frame stores. These are, however, specific to each particular kind of video system.

Respective aspects of the invention are set out in claims 1, 12, 16, 22 and 29.

A preferred embodiment of this invention provides a lamphouse suitable for a telecine, in which the spectral characteristics of the generated light are controllable, and furthermore in which those spectral characteristics are controlled electronically rather than by means of mechanical shutters or other mechanical means. The preferred lamphouse does not require a mechanical shutter at its output to generate 3-2 pulldown. The preferred lamphouse is more compact and generates much less heat than lamphouses of the prior art while still allowing the output light beam to have controllable spectral characteristics.

These advantages are achieved by employing four ferroelectric liquid crystal electronic shutters together with an arrangement of beam-splitters. Light generated from a single light source is first reflected through a cold mirror which removes much of the infrared content (to lessen heating of the electronic shutters). The light is then focused by lenses and enters a series of three beam-splitters. Each of the three beam-splitters splits the incoming beam, producing one output beam containing light within a certain band of frequencies and another output beam containing the remaining light. The beams which are split off pass through electronic shutters and are then recombined. Depending on whether the electronic shutters are open or shut, the beam which results from this arrangement is thus a combination of one, two, or all three of the beams coming out of the beam-splitters.

The invention will now be described by way of example with reference to the accompanying drawings, throughout which like parts are referred to by like references, and in which:
Figure 1 depicts a telecine system, showing how the lamphouse embodying the invention fits into the overall system;
Figure 2 depicts the overall configuration of the lamphouse embodying the invention;
Figure 3 depicts the beam splitter arrangement employed by the lamphouse;
Figure 4 depicts illustrative frequency characteristics of film dyes overlaid with a preferable set of spectral characteristics for the lamphouse embodying the invention, showing how these spectral characteristic avoid the regions of greatest dye crosstalk;
Figure 4A is a sectional view of the integrating cavity employed to diffuse light at the output of the lamphouse embodying the invention;
Figure 4B is a perspective view of the integrating cavity;
Figure 5 depicts how the ability to turn the light output of the lamphouse on and off very rapidly allows 3-2 pulldown and color correction to be implemented easily;
Figure 6 depicts the use of the lamphouse to achieve fast forward operation;
Figure 7 is an overall diagram of an electronic control system for driving the lamphouse embodying the invention; and
Figure 8 depicts the cooling system employed to cool the lamphouse embodying the invention.

In the following description, for purposes of explanation, specific nomenclature is set forth to provide a thorough understanding of the present invention. However, it will be apparent to one skilled in the art that these specific details are not required in order to practice the present invention. In other instances, well known circuits and devices are shown in block diagram form in order not to obscure the present invention unnecessarily.

### 1. A Telecine

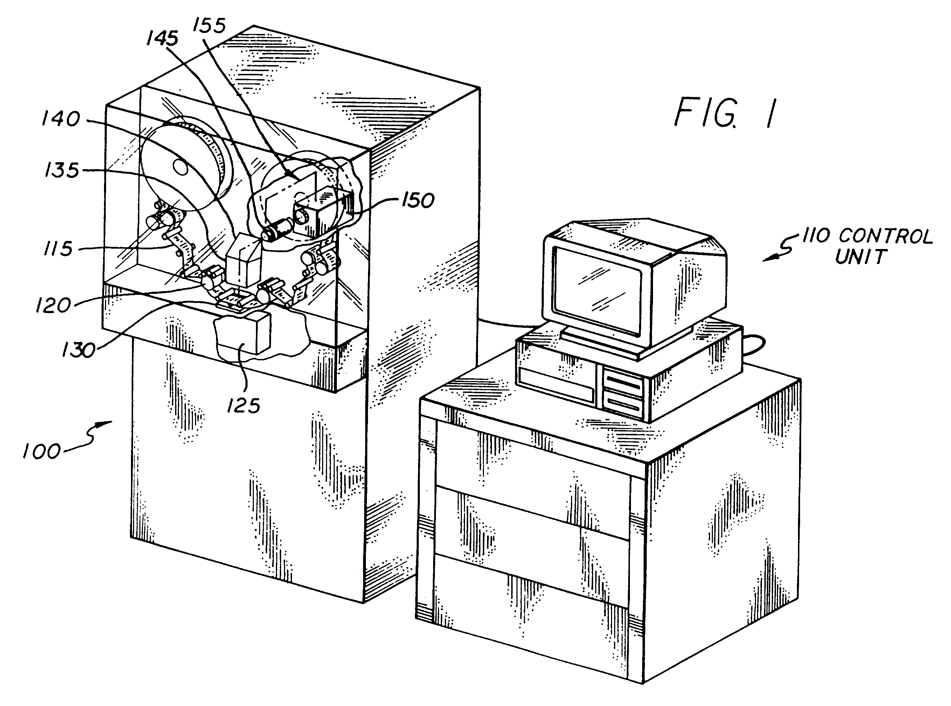

**Fig. 1** shows a front right perspective view of a telecine **100**, controlled by a computerized control unit **110**, in which the lamphouse of this invention could be employed. The telecine **100** contains a film transport subsystem **120**, a camera subsystem **135**, and a lamphouse **125**. To convert a motion picture film to a video, the motion picture film, for example film **115** shown in **Fig. 1**, is coupled to the film transport subsystem **120**. The film transport subsystem **120** moves the motion picture film **115** such that the film frames are exposed to the camera subsystem **135**. A pulldown period occurs for each motion picture frame; in that period, the frame is moved into a position in which it is held steady for exposure. The lamphouse **125**, as explained in more detail below, generates diffuse light illuminating each frame of film as it is held steady during an exposure period whose timing and duration are electronically controlled. During the exposure period, diffuse light from the lamphouse passes through the film frame and into the camera subsystem **135**. That subsystem comprises a mirror **140**, a corrective lens **145**, and a high definition (HD) camera **150**. That camera comprises three high-definition CCD arrays which record the red, green, and blue spectral components of the incoming image.

### 2. The Lamphouse

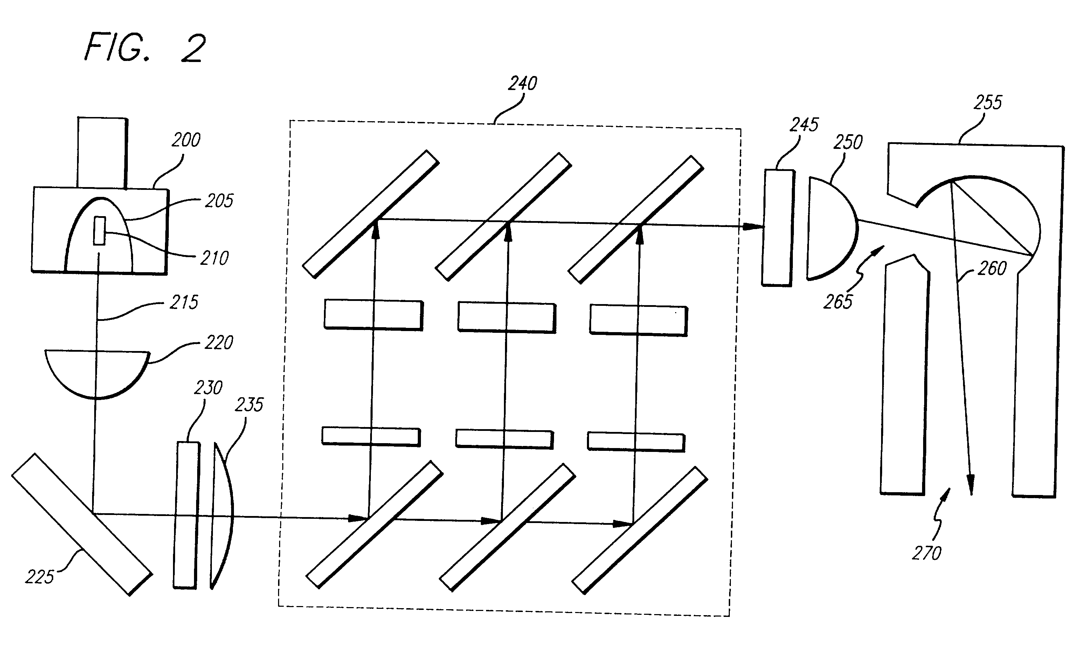

**Fig. 2** shows the overall configuration of the preferred embodiment of the lamphouse of the invention. A lamp **200**, which is preferably a short arc (2-3 mm) metal halide lamp, is provided with an ellipsoidal reflector **205**, which directs the light generated by the tube **210** through an aspheric condenser **220**, which collimates the beam, towards a cold mirror **225**. The cold mirror **225** reflects most of the light in the visible range (400-700 nm) while reflecting a much smaller proportion of the infrared light emitted by tube **210**. The remaining portion of the infrared light is transmitted through the cold mirror **225**. Cold mirror **225'**s reduced infrared reflection is beneficial because it limits the extent to which the light heats the equipment further down the optical path.

The light reflected by cold mirror **225** passes through the Corian infrared suppressor **230**. Lens **235** then reduces the beam to fill the entrance portion of the beam splitter assembly **240**. The path taken by an exemplary beam **215** is depicted in **Fig. 2**. As explained below, the beam splitter assembly **240** modifies the spectral characteristics of the light in beam **215**.

At the output of the beam splitter assembly **240**, the light passes through electronic shutter **245** and then through a second condenser **250**. The light passing through condenser **250** is diffused by means of the integrating cavity **255**. A diffuse light source is desired in a telecine system because it has a scratch-reducing effect. Specular, non-diffuse light is undesirable because it tends to highlight any scratches in the film.The path of an exemplary beam **260** through integrating cavity **255** is depicted, showing that the beam undergoes multiple internal reflections in the cavity **255** before exiting.

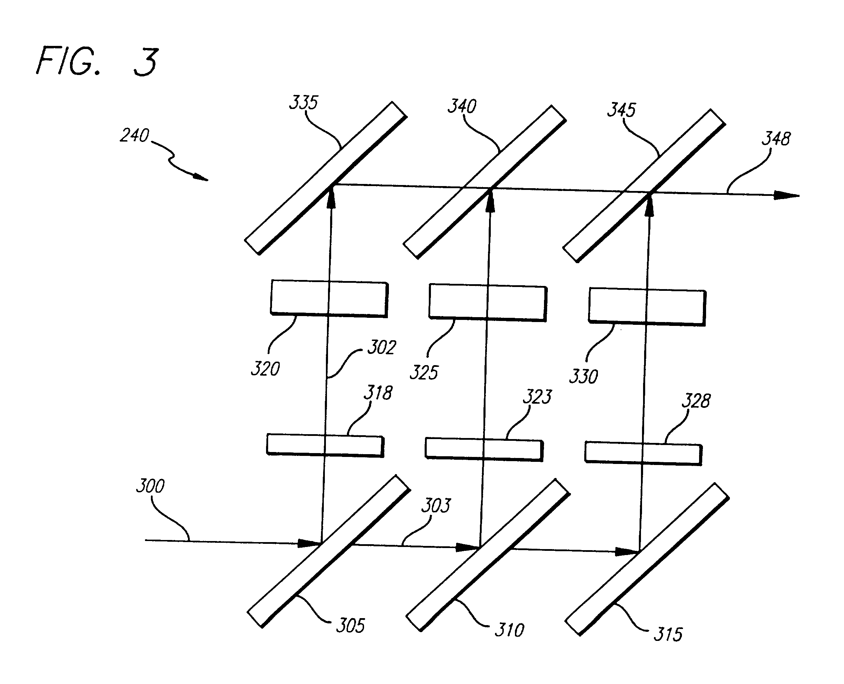

**Fig. 3** depicts in greater detail the configuration of beam splitter assembly **240**. The collimated light beam **300** enters the beam splitter assembly **240** and passes in succession through three beam splitters **305**, **310**, and **315**, which in the preferred embodiment are thin-film (dichroic) interference filters. Each of those beam splitters divides the beam into two parts, a deflected beam (for example **302**) which contains the light in a certain frequency range and an undeflected beam (for example **303**) which contains the remaining frequency content of the incoming light. Preferably beam splitters **305**, **310**, and **315** deflect light in the blue, red, and green frequency ranges respectively. Their precise frequency characteristics are discussed in more detail below.

The three deflected beams pass through trimming filters **318**, **323**, and **328** electronic shutters **320**, **325**, and **330**. The purpose of the trimming filters **318**, **323**, **328** is to suppress unwanted frequencies so as to achieve even greater frequency selectivity than is obtained with the interference filters **305**, **310**, and **315** alone.

The shutters **320**, **325**, and **330** are preferably bistable devices which are either "on" (meaning they pass a substantial proportion of the incident light) or "off" (meaning that they pass only a tiny fraction of the incident light). The beams which exit the shutters then reflected off interference filters **335**, **340** and **345**, which in a preferred embodiment have spectral characteristics similar to those of the interference filters **305**, **310** and **315** respectively. These components serve to reassemble the beam, with its frequency content selectably altered by means of the beam splitters, trim filters, and electronic shutters.

An obvious advantage of this arrangement is that only one short arc light source is used, greatly reducing bulk and heat dissipation compared to lamphouses of the prior art. A short arc lamp is more readily collimated and this helps minimize total optical path length. It is found that with this arrangement, there is no need for additional lenses within the beam splitter assembly, avoiding the problems (e.g., reflection, need to maintain cleanliness) which each additional air to glass surface engenders. The optical path is short and direct.

### 3. The Beam Splitters

In the preferred embodiment the beam splitters are thin-film (dichroic) interference filters. Such filters are well known in the art and are produced by a number of commercial suppliers, including Optical Coatings Laboratory of Santa Rosa, California.

There is considerable latitude in the choice of the spectral characteristics of the beam splitters. The frequency passbands (i.e. the ranges of frequencies which the beam splitters deflect) should be narrow enough that the output beam of the beam splitter assembly **250** avoids the frequency ranges in which there is substantial crosstalk between the film dyes or within the video camera. As stated above, the passbands are preferably further narrowed through the use of trimming filters **318**, **323**, and **328**. The passbands should however be broad enough to avoid losing a large fraction of the light entering the beam splitter assembly **250**, and the output beam should include the optical frequencies at which the film dyes absorb most strongly.

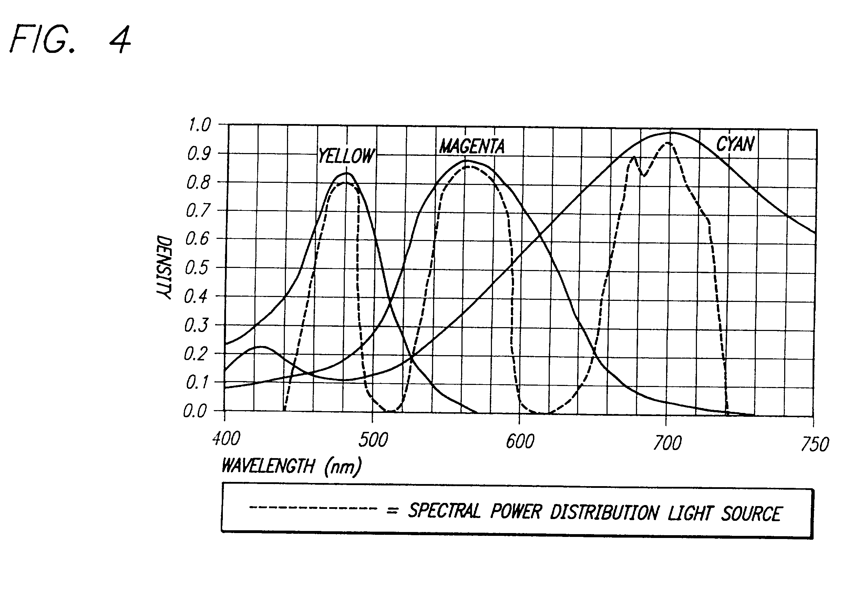

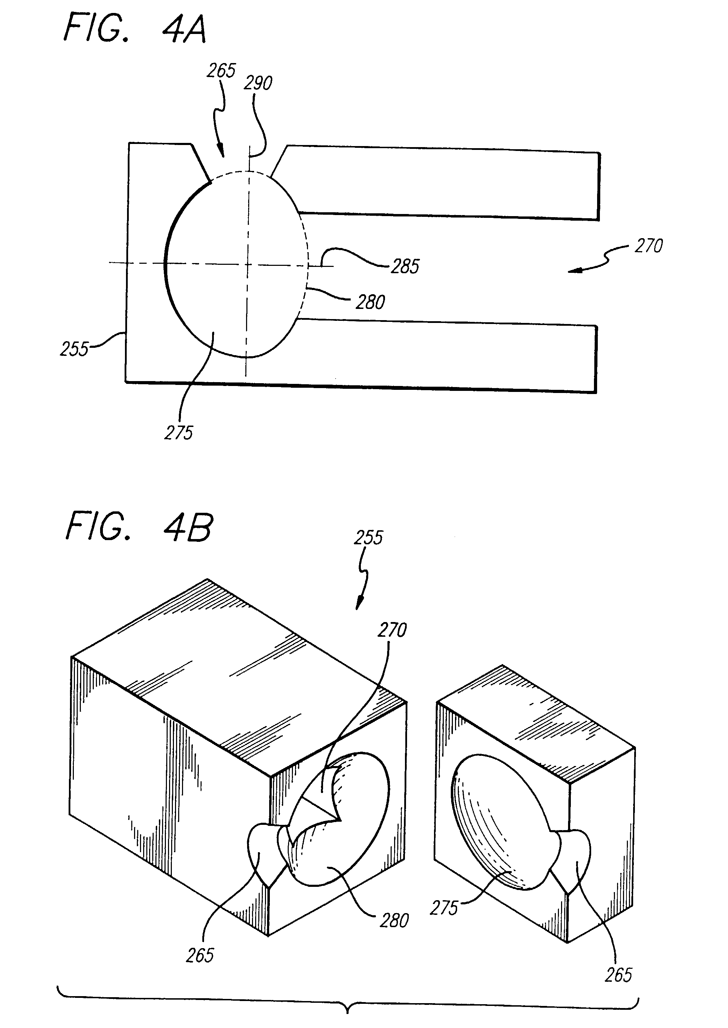

The expression "crosstalk between the film dyes" refers to optical frequencies at which more than one of the three film dyes absorbs light to a significant extent. The expression "crosstalk within the video camera" refers to optical frequencies which register in more than one of the video camera's three CCD arrays to a significant extent. Crosstalk in the video camera is caused by the desirability of the beamsplitter at the input of the camera (which is generally a prism) to divide all frequencies of the incoming light perfectly according to frequency before sending it to the three CCD arrays. **Fig. 4** depicts the frequency characteristics of typical film dyes (solid lines) and also shows a preferable set of frequency characteristics for the light output of the lamphouse of the invention (dashed lines). It is readily seen that the frequency characteristics have been chosen so as to avoid the areas of greatest crosstalk.

If the light beam which exits the beam splitter assembly **240** avoids frequency ranges in which there is crosstalk, then each of the video camera's CCD arrays will measure, in effect, the spatial density distribution of one particular dye in the film as accurately as possible, without being affected by the distribution of the other two dyes. This accurate measurement of dye density is particularly desirable if the subsequent processing of the recorded video includes digital color correction based on the film dyes' characteristic curves, as described for example in U.S. Patent No. 5,255,083, Digital Color Correction System and Method, assigned to Sony Corporation of America. By using those characteristic curves in conjunction with an accurate measurement of dye density, it is possible to work backwards to compute the color of the light which was incident on each small area of the film at the time it was exposed. Having computed that color, one may then select and record video RGB values which correspond to a combination of video RGB primaries which most closely matches that color, achieving a color reproduction system which is calibrated all the way from camera to video monitor.

### 4. The Electronic Shutters

In the preferred embodiment, the electronic shutters (also referred to as "light valves") consist of a ferroelectric liquid crystal between crossed polarizers. Suitable electronic shutters are made by Displaytech Inc. of Boulder, Colorado. The ferroelectric liquid crystal acts as a voltage-controlled half-wave plate. The preferred electronic shutters transmit roughly 28-30% of the incident light when in the on state, and less than 0.05% when in the off state. They transition very quickly between the on and off states, within about 70 microseconds. They thus respond much more rapidly than the mechanical shutters used in the telecine system disclosed in the '387 patent, and much more rapidly than the nematic liquid crystals used in portable computer display screens. This rapid response is valuable for telecine applications.

It is found in practice that ferroelectric liquid crystals have preferred frequencies at which the contrast ratio (the ratio between the amount of light transmitted in the "on" state and in the "off" state) is highest. In the preferred embodiment, the ferroelectric liquid crystals are manufactured especially to have preferred frequencies centered in the passbands of the light beams which pass through them.

Besides the three electronic shutters **320**, **325**, and **330** used in the beam splitter assembly, a fourth electronic shutter **245** is used at the output of that assembly. Shutter **245** is off whenever all of **320**, **325**, and **330** are off, and otherwise on. The reason for employing shutter **245** is that some light leaks through ferroelectric liquid crystal electronic shutters even in the off state. Shutter **245** stops any light which may leak through shutters **320**, **325**, and **330** when they are all off. This serves to increase the dynamic range of the lamphouse, that is to say, the ratio of the maximum light generated by the lamphouse and the amount of light generated when all the shutters are off. The dynamic range (contrast) of the fourth shutter **245** multiplies the dynamic range of the color controlling shutters **320**, **325**, **330**, so that for example if all the shutters have dynamic range 100:1, the overall system has dynamic range 100:1 times 100:1, or 10,000:1.

Because each electronic shutter in the preferred embodiment is either on (allowing light to pass through) or off, the three electronic shutters consequently allow only eight different beam spectral compositions to be selected at any one time. These eight spectral compositions may be described succinctly as: no beam, red beam, green beam, blue beam, red+green beam, red+blue beam, green+blue beam, and white (red+blue+green) beam. In effect, the beam-splitter/shutter assembly allows one to generate an output consisting of any combination of a red beam, blue beam, and green beam. It does not, however, allow one to vary the intensity of those beams, other than by turning the beams on and off.

### 5. The Integrating Cavity

The integrating cavity **255** is preferably made of a highly reflective material, which reflects more than 99% of incident light, and whose reflection characteristics are approximately Lambertian. An example of such a material is Spectralon®, which is manufactured by Labsphere, Inc. of Sutton, N.H. The opening **265** through which light enters is preferably 1.27 cm in diameter, whereas the opening **270** through which the light exits is preferably of rectangular cross section about 2.54 cm by 1.9 cm (for standard 35 mm film), and about 5.6 cm long. The openings **265** and **270** should be sized and located so that substantially all rays of light entering through opening **265** and exiting through the output opening **270** undergo at least two reflections within the cavity.

**Fig. 4A** is a sectional view of integrating cavity **255** showing in more detail the preferred geometry. The hollowed-out portion of the cavity consists of the openings **265** and **270**, together with two hollowed-out half-ellipsoids **275** and **280**. Both half-ellipsoids **275** and **280** share a common axis of rotation **285** and have a major axis radius of 2 cm. Half-ellipsoid **275** has a minor axis radius of 1.75 cm, whereas half-ellipsoid **280** is flatter and has a minor axis radius of 1.25 cm. **Fig. 4B** is a perspective view of the integrating cavity **255**, cut along the line **290** shown in **Fig. 4A**. The half-ellipsoids **275** and **280** may readily be seen in **Fig. 4B**, as can input opening **265** and the portion of the output opening **270** closest to the half-ellipsoids. In practice, it is desirable to fabricate the integrating cavity by manufacturing two pieces of the shapes indicated in **Fig. 4B** and fastening the pieces together, e.g., by means of a box surrounding them.

The goal of an integrating cavity is to produce diffuse light at the output even if the light entering it is specular. The quality of the cavity may be measured by the following figures of merit: (1) uniformity of the light intensity across the output opening, (2) average light intensity in the direction in which light exits, measured at the output opening, and (3) size of the output opening relative to the overall size of the cavity.

In order to quantify the advantage of the cavity of the invention over the prior art, a reference integrating sphere made of Spectralon, having a diameter of 5 cm and input and output apertures of the same size and shape as those of the preferred embodiment, was constructed. Both were illuminated through their input openings with the same light source. It was found that the uniformity of the light intensity across the output opening of both the prior art sphere and the integrating cavity was 2% (that is to say, the lowest light intensity was at least 98% as great as the peak light intensity). It was further found that the average light intensity across the output opening of the preferred integrating cavity was 2.3 times as great as the average light intensity across the output of the prior art integrating sphere.

In the preferred cavity, the output opening is 1.9 cm by 2.54 cm while the diameter of the cavity is 4 cm at its widest point (twice the major axis radius of 2 cm). The ratio between the area of the output opening and the square of the diameter of the preferred cavity is about 30%, whereas for the prior art spherical integrating cavity with 5 cm diameter it would be about 19%.

It was also found that a 4.5 cm spherical integrating cavity with input and output openings of the same shape and size as the preferred cavity was not able to achieve 2% uniformity of light output. This was the reason for choosing a 5 cm spherical integrating cavity as a basis for comparison.

### 6. 3-2 Pulldown

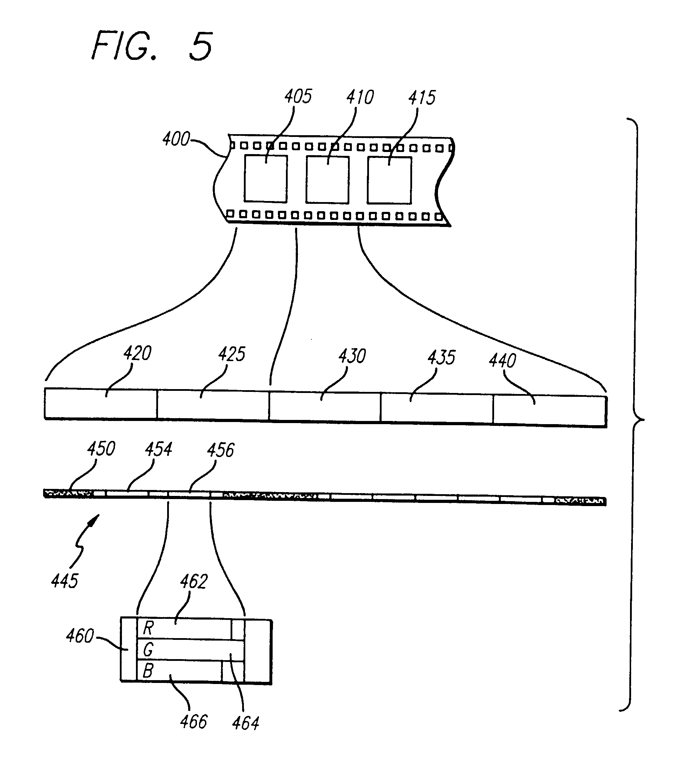

The lamphouse of the invention also makes it possible to achieve 3-2 pulldown with no mechanical shutters at the output of the lamphouse. **Fig. 5** shows schematically how 3-2 pulldown works. The film **400** contains a sequence of frames **405**, **410**, **415**. The film transport subsystem **120** pulls a film frame into place, and the lamphouse **125** then exposes it twice. The film transport subsystem **120** pulls the next film frame into place, the lamphouse **125** exposes it three times, and so on repeatedly. Each exposure results in one field of video.

**Fig. 5** shows the five video fields **420**, **425**, **430**, **435**, and **440** in which the two film frames **405** and **410** are captured. As may be seen from **Fig. 5**, the film frame **405** is captured in two video fields **420** and **425**, whereas the film frame **410** is captured in three video fields **430**, **435**, and **440**. Each video field **420, 425**, **430**, **435**, **440** has a duration of 1/60th of a second, approximately 17 milliseconds.

The timeline **445** in **Fig. 5** shows the time relationship between the 17 millisecond duration of each video field, the time it takes to pull the next film frame into place, and the exposure periods. Dark areas in the timeline (for example **450**) depict times during which film transport **120** pulls the next film frame into place, which takes about 8 milliseconds in the worst case. White areas (for example **454** and **456**) depict the exposure periods during which the lamphouse of the invention exposes the film frame, allowing it to be captured by the video camera subsystem **135**. The exposure periods all last approximately 6 milliseconds.

The exposure periods cannot overlap with the times when the next film frame is being pulled down. For example, exposure period **454** cannot overlap with pulldown time **450**. Furthermore, the exposure period corresponding to a video field must occur during the video camera capture interval corresponding to that field. For example, exposure period **454** must take place during the video camera capture interval corresponding to its video field **420,** the next exposure period **456** must take place during the capture interval corresponding to the next video field **425**, and so forth.

As may be seen from the timeline **445**, in spite of these constraints, there is considerable leeway as to when the exposures can take place and when the film transport can pull the next frame down. For example, it is clear that exposure period **456** could occur somewhat earlier or somewhat later without violating these constraints. The electronic shutters allow one to start an exposure period at any time, since they take only about 70 microseconds to turn on and off. This flexibility can be used, for example, to achieve slow motion or fast forward operation. The duration of each video field is still about 17 milliseconds, and the film transport mechanism **120** still takes about 8 milliseconds to pull down the next frame. However, the times at which pulldown and exposure begin can be moved so as to display the film at a speed different from the standard 24 frames per second.

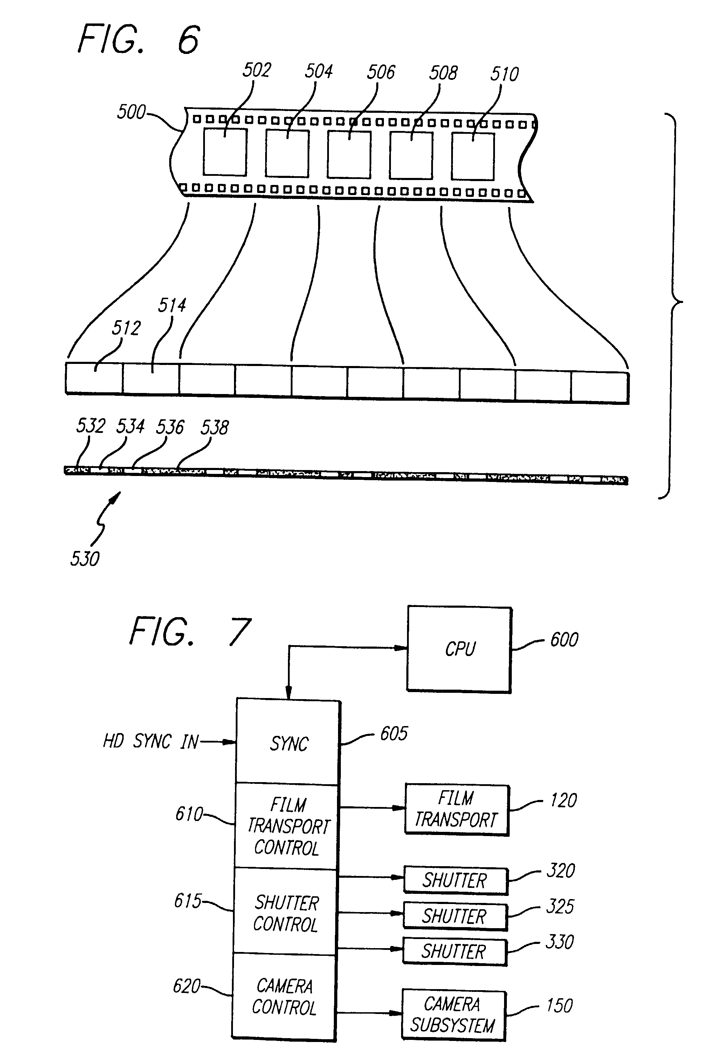

Assume, for example, that one wished to run the film somewhat faster than normal, at 30 frames per second rather than 24, so that there should be two video fields per film frame. **Fig. 6** illustrates a possible timing arrangement which supports this mode of operation. Each of the film frames **502**, **504**, **506**, **508**, and **510** now corresponds to two video fields. For example, film frame **502** corresponds to video fields **512** and **514**. Each film frame consequently needs to be exposed twice. Timeline **530** shows the pulldown and exposure periods. For example, film frame **502** is pulled down into position during time **532**, is exposed during time **534** to give video field **512**, and is exposed again during time **536** to give video field **514**. The next frame **504** is then pulled down during time **538**. It is readily seen that other frame rates may be achieved in a similar manner, up to the limit set by the duration of the pulldown and exposure periods. Even faster rates may be achieved by splitting an exposure period between two film frames, that is to say, by beginning to expose the CCDs while one film frame is in position, stopping the exposure as the next film frame is pulled down, and then finishing the exposure period with the next film frame in position. This results in an exposure period which is composed of two disjoint time intervals. While this method produces some small artifacts, a fast forward done in this manner can still be useful to the operator during color correction.

In contrast to the system of this invention, the mechanical shutter of the '387 patent was a disk in which five holes were formed. The disk rotated in the space between the light beam and the film, blocking the light beam except when the five holes were positioned so as to allow the light beam to pass through. The exposure period had to be longer, 4 milliseconds rather than 2, because there was a period of partial exposure as the hole moved into position to allow light through and then another period of partial exposure as it moved out of position. Furthermore, the time between successive exposures was fixed because it depended only on the spacing between the holes on the disk and on the fixed speed with which the disk rotated. It is readily seen that the lamphouse of this invention represents a considerable advance.

### 7. Color Correction

Because the lamphouse of the invention allows only selection between eight beam spectral compositions, color correction is accomplished by controlling the amount of time during which each of the red, green, and blue beams is on by means of the electronic shutter. As explained in more detail below, this is possible because the output of a CCD imaging array represents the total amount of light received during a sampling period, irrespective of the time within the sampling period during which the light was received.

CCD imagers have a large number of photosensitive cells arranged in a rectangular array. Each photosensitive cell corresponds to some small area within the image. The CCD arrays have a sampling period, say 1/60th of a second corresponding to the standard field time for SMPTE-240M video. During the sampling period, each of the photosensitive cells senses incoming photons and accumulates a charge proportional to the number of incoming photons. At the end of the sampling period, the accumulated charge in each cell is recorded in a storage device, the cell is reset to zero, and measurement of the number of incident photons starts anew. In a CCD array, then, the total amount of light that hits each cell during the 1/60th of a second sampling period is the only thing that matters as regards the array's output. It does not matter if the light all hits the cell in a short subinterval within the 1/60th of a second, or whether the light hits the cell at a uniform rate throughout the 1/60th of a second exposure period. (In a color camera, three separate CCD arrays of cells sense light in three different frequency ranges, prisms being used to split the incoming light beam into those frequency ranges.)

CCD imagers' ability to respond exclusively to the total amount of light received within a sampling period, regardless of when within the sampling period the light arrived, makes them operate differently from photographic film. If one exposes a film to light of a certain irradiance I and frequency profile for 1/60th of a second, and then exposes another identical film to light of irradiance I/10 and identical frequency profile for 1/6th of a second, the two films will not respond equally. In contrast, within their sampling period CCD arrays are indifferent to just when the photons arrive. Exposing a CCD array to a bright beam for a short period of time or a less bright beam of the same frequency profile for a longer period of time produces the same end result, as long as the total light energy in the two beams is the same.

Because of this characteristic of CCD imagers, it is possible to perform color correction with the lamphouse of the invention by varying the amount of time during which each of the red, green, and blue beams is on during a sampling period. This time variation achieves the same ultimate effects on the color cast of the resulting video as if one were varying the intensity of the beam. **Fig. 5** depicts the variation in the individual beams' exposure times schematically. Timeline **460** is an enlargement of a small portion of timeline **445**, corresponding to a single exposure period. It may be seen that when color correction is being carried out, the red, green, and blue beams will be on for somewhat different lengths of time, depicted by white areas **462**, **464**, and **466** on the timeline.

An electronic computer which controls the overall operation of the telecine can provide an operator with a control capability which maintains the same user interface familiar from prior art telecine color correction systems, even though the manner in which the color correction system operates is completely different. Furthermore, this control is achieved by purely electronic means, in contrast to the '387 patent telecine's use of a mechanical light valve to occlude each beam in conjunction with a variable power supply.

### 8. Control Electronics

As is apparent from the preceding description, in order for the preferred embodiment to operate, it is necessary to have control electronics which drives the electronic shutters **320**, **325**, and **330** and causes them to turn on and off at the appropriate times to achieve color correction and 3-2 pulldown. This control electronics must also ensure the film transport subsystems **120** is pulling the next film frame down at the appropriate times. Finally, this control electronics must receive input from a user interface allowing the user to specify color correction, film playback rate, and other control information.

**Fig. 7** depicts a preferred embodiment for achieving this control. A CPU **600** operating under the control of software directs the operation of the system. A precision high definition (HD) Sync signal is input to a synchronization subsystem **605**, which provides timing sources locked to the precision HD Sync signal. A film transport control subsystem **610** directs the operation of the film transport subsystem **120**, and in particular can cause the film pulldown operation to start under CPU control at any time. A shutter control subsystem **615** drives the three electronic shutters **320**, **325**, **330** and can turn them on and off under CPU control at any time. A camera control subsystem **620** communicates with the camera subsystem **150** and supplies it with a video sync signal, derived from the precision HD Sync signal, to which the camera's video sync is synchronized. This synchronization results in the beginning and end of each video field capture period being synchronized with the precision HD Sync signal, so that software in the CPU can determine from signals generated in the synchronization module **605** the time at which each video field capture period begins and ends. The start of each video field capture period is the fundamental time reference on the basis of which the CPU determines when to start and end of the exposure periods and when to direct that the next film frame be pulled down.

### 9. Cooling

The ferroelectric liquid crystal electronic shutters preferably employed in the lamphouse invention are sensitive to temperature. There is an optimum temperature at which they will transmit light most efficiently in the "on" state, and the amount of light transmitted in the "on" state falls away sharply as one deviates from that temperature. A deviation of 10 degrees Celsius from the optimum temperature can give rise to a factor of three reduction in the contrast ratio (that is, the ratio between the amount of light transmitted in the "on" state and the amount of light transmitted in the "off" state). For further information on temperature sensitivity, one may consult the *Displaytech Shutters User's Manual* (version 1.1, February 1994), published by Displaytech Inc. of Boulder, Colorado.

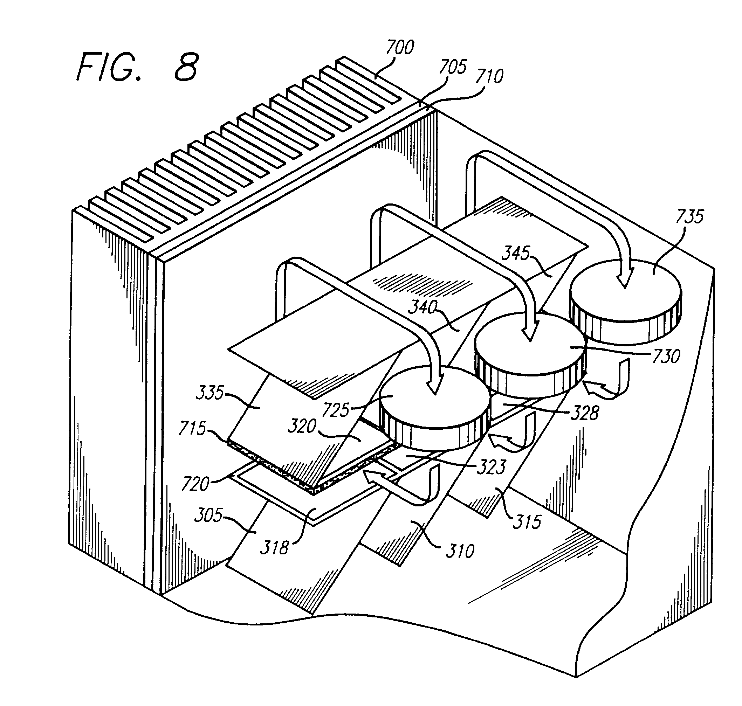

Because the shutters are sensitive to temperature, it is necessary to employ some sort of cooling system to keep them an a roughly constant temperature. **Fig. 8** depicts in schematic form the cooling system of the preferred embodiment of the invention. For reasons of clarity, **Fig. 8** shows a cutaway view, not necessarily to scale, and the mechanical support for certain components is not shown because it would occlude other portions of the cooling system.

The cooling system depicted in **Fig. 8** is a Peltier cooling system. A Peltier cooling system is employed to maintain a cold plate **710** at a low temperature. Because of the inherent insulating properties of undisturbed air, the cold plate does not itself appreciably affect the temperature of the electronic shutters.

Cold plate **710**, preferably of aluminum, is connected via a Peltier cooling device **705** to a heat sink **700**. When the Peltier cooling device **705** is actuated, it causes the transfer of heat from the cold plate **710** towards the heat sink **700**. A fan (not shown) may be employed to blow air over heat sink 700. In the preferred embodiment, resistance temperature devices (RTD's) affixed to the electronic shutters cause a thermostatic controller to activate fans **725**, **730**, and **735** which cause air to be circulated across the cold plate. This is a very low hysteresis system and results in rapid cooling to quickly maintain the desired temperature of the electronic shutters.

The beam splitter assembly is located within an enclosure (shown in a cutaway view in **Fig. 8**) on the side of the cold plate **710** opposite the heat sink 700. Three fans **725**, **730**, and **735** blow air in a doughnut pattern, indicated by the arrows, so that air first flows past the electronic shutter mount **715**, then past the cold plate **710**, and then back into the fans **725**, **730**, and **735.** The three electronic shutters **320**, **325** (obscured in **Fig. 8**), and 330 (obscured in **Fig. 8**) are affixed to electronic shutter mount **715**. The air blown by the fans passes between the electronic shutter mount **715** and the trim filter mount **720**, disposed a short distance below electronic shutter mount **715**. The three trim filters **318**, **323**, and **328** are located on trim filter mount **720**. Three interference filters **305**, **310**, and **315** are arranged below the trim filter mount **720**; interference filters **335**, **340** and **345** are arranged above the electronic shutter mount **715**.

### 10. Other Applications

Although the lamphouse of the invention was designed for use in a telecine, it will be readily apparent to those skilled in the art that it may also be employed in other applications requiring an apparatus for generating bright light with electronically controllable spectral characteristics. In particular, the invention may be employed in a color printer or color photocopier, and the beam splitter assembly may be employed to perform pulse shaping of flash lamp output. Furthermore, it would be possible to employ the invention in a telecine employing a camera subsystem in which the red, green, and blue contents of a film frame are captured during different, sequential non-overlapping exposure periods.

## Claims

1. An apparatus for generating light with controllable spectral characteristics comprising
a light source,
a first beam splitter receiving light obtained from said light source and splitting it into first deflected light beam and a first undeflected light beam,
a first electronic shutter disposed to regulate passage of said first deflected light beam through it,
a second beam splitter receiving said first undeflected light beam and splitting it into a second deflected light beam and a second undeflected light beam,
a second electronic shutter disposed to regulate passage of said second deflected light beam through it, and
means for recombining said first and second deflected light beams after they have passed through said first and second electronic shutters to produce a recombined beam.

2. The apparatus of claim 1, further comprising
a reflecting element receiving said second undeflected light beam and generating from it a third deflected light beam, and
a third electronic shutter disposed to regulate passage of said third deflected light beam through it.

3. The apparatus of claim 2, further comprising means for combining said third deflected light beam with said recombined beam to produce a second recombined beam.

4. The apparatus of claim 3, further comprising a fourth electronic shutter through which said second recombined beam passes.

5. The apparatus of claim 1, where said light source emits both infrared and visible light, further comprising a cold mirror which reflects a low proportion of said infrared light and a high proportion of said visible light towards said first beam splitter.

6. The apparatus of claim 1, further comprising a light integrator into which said recombined beam enters and which generates a diffuse beam from said recombined beam, said light integrator comprising a solid body having a cavity of nonspherical shape, said cavity having a highly reflective surface.

7. The apparatus of claim 4, where said recombined beam enters said integrating ellipsoid through an aperture perpendicular to said minor axis.

8. The apparatus of claim 5, where said aperture is of a diameter equal to at least 25% of the length of said major axis.

9. The apparatus of claim 1, where said first and second electronic shutters are bistable devices.

10. The apparatus of claim 1, where said first and second electronic shutters comprise ferroelectric liquid crystals.

11. The apparatus of claim 10, further comprising a Peltier effect cooling system for maintaining the temperature of said first and second electronic shutters approximately constant.

12. In a telecine which generates a video image of a film frame during an exposure period, a method of color correction, comprising the steps of
generating a red beam, a green beam, and a blue beam,
passing said red beam through a first electronic shutter,
passing said green beam through a second electronic shutter,
passing said blue beam through a third electronic shutter,
turning said first electronic shutter on for a first fraction of said exposure period,
turning said second electronic shutter on for a second fraction of said exposure period,
turning said third electronic shutter on for a third fraction of said exposure period,
recombining said red, green, and blue beams after they have passed through said first, second, and third electronic shutters to produce a recombined beam,
illuminating said film frame with said recombined beam.

13. The method of color correction of claim 12, where said step of generating a red beam, a green beam, and a blue beam comprises the substep of splitting a beam of white light into a red beam, a green beam, and a blue beam.

14. The method of color correction of claim 12, where the spectral compositions of said red beam, green beam, and blue beam substantially avoid those frequencies at which a high level of crosstalk between film dyes occurs.

15. The method of color correction of claim 12, where said first, second, and third fractions of said exposure period do not overlap with each other.

16. A method of converting motion picture film comprising a plurality of frames to video, said method comprising the steps of:
generating a red beam, a green beam, and a blue beam,
passing said red beam through a first electronic shutter,
passing said green beam through a second electronic shutter,
passing said blue beam through a third electronic shutter,
recombining said red, green, and blue beams after they have passed through said first, second, and third electronic shutters to produce a recombined beam, and
for each frame in said plurality of frames, performing the steps of: generating a plurality of exposure periods, and for each exposure period in said plurality of exposure periods, performing the steps of:
illuminating said frame during said exposure period with said recombined beam to create an optical film image,
detecting said optical film image with a detector, and
generating a video field from the output of said detector.

17. The method of claim 16, further comprising the steps, performed for each exposure period in said plurality of exposure periods, of
placing said first electronic shutter in an on state during a first portion of said exposure period,
placing said second electronic shutter in an on state during a second portion of said exposure period, and
placing said third electronic shutter in an on state during a third portion of said exposure period.

18. The method of claim 16, where the spectral compositions of said red beam, green beam, and blue beam substantially avoid those frequencies at which maximum crosstalk between film dyes occurs.

19. The method of claim 16, where said step of generating a plurality of exposure periods is performed so as to achieve 3-2 pulldown.

20. The method of claim 16, where said step of generating a plurality of exposure periods is performed so as to achieve fast forward operation.

21. The method of claim 16, where at least one of said plurality of exposure periods comprises two disjoint time intervals.

22. A light integrator in the form of a solid body, said solid body having formed within it
a cavity of nonspherical shape having a surface whose reflectivity exceeds 95%,
an inlet aperture joining said cavity of nonspherical shape to the outside of said solid body, and
an exit aperture joining said cavity of nonspherical shape to the outside of said solid body,
the walls of said cavity of nonspherical shape, inlet aperture, and exit aperture being configured so that light rays entering said inlet aperture and exiting through said exit aperture are reflected at least twice before exiting.

23. The light integrator of claim 22, where said exit aperture has a cross section, as cut by a plane perpendicular to the average direction of light exiting through said exit aperture, which is at least 15% of the cross section of said solid body, as cut by said plane.

24. The light integrator of claim 23, where the light output across said exit aperture in the average direction of light exiting said exit aperture is uniform within 2%.

25. The light integrator of claim 24, where the average light output across said exit aperture in the average direction of light exiting said exit aperture, measured employing a light source directed at said inlet aperture, is at least 1.5 times the output which would be achieved employing said light source with a spherical integrating cavity, where said spherical integrating cavity has a surface of equal reflectivity to that of said cavity of nonspherical shape, an inlet aperture of the same shape as said inlet aperture, and an exit aperture of the same shape as said exit aperture, and where the light output across the exit aperture of said spherical integrating cavity is uniform within 2%.

26. The light integrator of claim 23, where said exit aperture has a generally elongated shape and a surface whose reflectivity exceeds 95%.

27. The light integrator of claim 22, where said nonspherical shape is the union of a first and second solid of revolution, said first and second solids of revolution each having an axis of revolution.

28. The light integrator of claim 27, where said first solid of revolution is a portion of an ellipsoid cut along a plane perpendicular to the axis of revolution associated with said first solid of revolution.

29. A light integrator in the form of a solid body, said solid body having
a cavity of generally ellipsoidal shape having a surface whose reflectivity exceeds 95%,
an inlet aperture joining said cavity to the outside of said solid body, and
an exit aperture joining said cavity to the outside of said solid body,
the walls of said cavity, inlet aperture, and exit aperture being configured so that at least 95% of light rays entering said inlet aperture and exiting through said exit aperture are reflected at least twice before exiting.

30. The light integrator of claim 29, where said generally ellipsoidal shape is symmetric about an axis.

31. The light integrator of claim 30, where said generally ellipsoidal shape comprises the union of two half-ellipsoids, each symmetric about said axis.
